(19) Europäisches Patentamt
European Patent Office
Office européen des brevets

(11) **EP 3 043 576 A1**

(12) **EUROPEAN PATENT APPLICATION**

(43) Date of publication:
**13.07.2016 Bulletin 2016/28**

(51) Int Cl.:
*H04W 4/00* (2009.01)   *H04W 4/02* (2009.01)
*H04L 29/08* (2006.01)   *G06Q 30/02* (2012.01)
*G06Q 30/06* (2012.01)   *G06Q 20/32* (2012.01)

(21) Application number: **15461503.3**

(22) Date of filing: **08.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Sensi Soft Sp. z o.o.
02-532 Warszawa (PL)**

(72) Inventor: **Batory, Stefan Dominik
02-722 Warszawa (PL)**

(74) Representative: **Sielewiesiuk, Jakub
AOMB Polska Sp. z o.o.
Emilii Plater 53, 28th floor
00-113 Warszawa (PL)**

(54) **System for user identification, booking and delivering additional services using smart devices and desktop appliance**

(57)     The invention is related to a system and a method for customer identification and for making service reservations and targeted advertisement via the use of smart devices, the system comprising a BooksyBiz web application, a Booksy mobile app which can receive a signal and communicate with the web app and a Booksy database, and micro localization smart devices which can transmit signals to client apps in their proximity. Customer localization and identification using short range beacons (e.g. using Bluetooth Low Energy) allows the system to provide better personalized service by triggering actions based on customer current location, reservation history, habits in accordance with service provider staff and service availability.

Fig. 4

## Description

Technical Field

The invention is related to a system for user identification, making reservations and providing personalized services with a use of smart.

Invention also includes a method for user identification, making reservations and providing them personalized services using smart devices and desktop according to above-mentioned system.

Background

Currently there are known similar technologies for near communication:

> NFC (Near Field Communication) - allows communicates both ways, but devices can't detect distance between them.
>
> iBeacon - Apple Inc. technology. Transmitting one way with UUID only. Allows to detect 3 ranges os distance (close, middle, far).
>
> Seeknfind - Daelibs Pty Ltd indoor proximity sensing in its Seeknfind location attendance solution.

*Problem*

Couple of years ago if someone wanted to book service like haircut he would need to go to the barber by himself or use a phone. Nowadays, using smartphones one is able to books service with apps like Booksy. But there are still problems that are not solved by those apps are:

> 1. User needs to know if his service provider (i.e. barber) offers booking option.
>
> 2. User needs to know exact name of service provider to be able to find him in any catalogue.
>
> 3. User can get information about all available services only at reception desk.
>
> 4. Service provider cannot offer personalized services.
>
> 5. Service provider doesn't know who his client is.

Booksy solution eliminates those obstacles by using connected appliances like smart devices, desktop computers, mobile apps and micro localization technology.

## Definitions

*Smart device*

Smart device - device connected with other devices of the same type using different connection protocols and technology like Bluetooth, Bluetooth Low Energy, Near Field Communication, WiFi, 3G. Example devices: smart phones, phablets.

*Smart peripherals*

Smart Peripherals are devices connected to system using various protocols like WiFi, Bluetooth or other. Those can be computers, TV screens, multimedia stands, external mp3 players and other. Those could be also application installed on such devices like apps on smart TV or beacon. Difference between Smart Peripheral and Smart Device is that first one communicates in one direction. In most cases peripheral can only receive command via built-in API.

*Beacon*

Beacon is a device that emits radio signal, that can be received by other devices i.e. smartphones using Bluetooth Low Energy protocol (also known as Bluetooth Smart). Because of their low battery consumption those devices can work for long period of time (2 - 3 years). With the help of an Beacon, a smartphone's software can find its relative location to an Beacon in a store. Beacons can help a phone show notifications of items nearby that are on sale, and it can enable payments at the point of sale (POS) where customers don't need to remove their wallets or cards to make payments. Beacon technology works using the Bluetooth Low Energy (BLE) technology, also known as Bluetooth Smart. Beacon is a particularly favorable example of a class of devices called *micro localizator.*

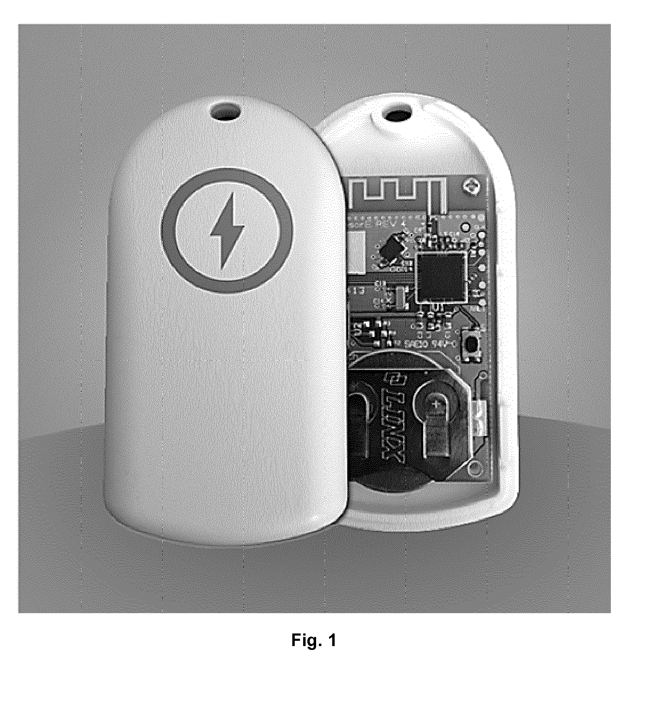

Using beacons Booksy can communicate with users pushing data into its application (even when phone is locked). It also allows to triangulate users position inside local. Beacons can have variety of additional sensors like temperature or accelerometer (Fig. 1).

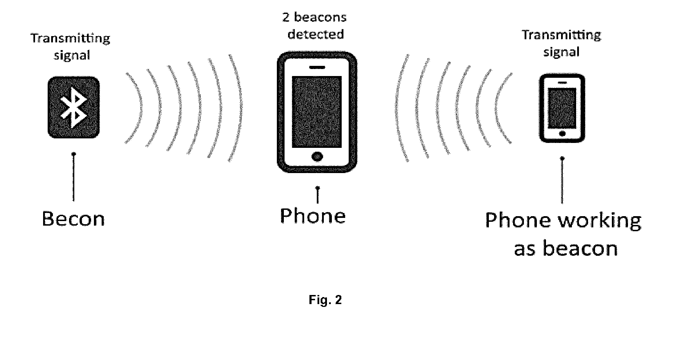

Beacon uses Bluetooth low energy proximity sensing to transmit a universally unique identifier UUID (Universally Unique Identifier) picked up by a compatible app or operating system. The identifier can then be looked up over the internet to determine the device's physical location or trigger an action on the device such as a check-in on social media or a push notification. Every device that uses Bluetooth 4.0 Low Energy can receive such signal or emit it even further using same protocol (Fig. 2).

In connection with trigger management system and application that will receive transmitted UUID we can define action that should take place. For example we can push order to user application to show message. Also we can use other peripherals connected to system so we can push personalized advertisement to TV monitor near user.

Every beacon transmits power TX - this parameter allows us to know exact distance from that particular beacon. We can read how strong this parameter is and calculate this into meters with 1 meter accuracy. Using 3 or more devices we can triangulate exact location of receiver standing between them. So if we know were those devices are in our local and where is receiver (i.e. user phone) we can assume position of user inside this local. The maximum range of an Beacon transmission will depend on the location and placement, obstructions in the environment and where the device is being stored (e.g. in a leather handbag or with a thick case). Standard beacons have an approximate range of 70 meters. Long range beacons can reach up to 450 meters.

Beacons have three tiers of proximity - far, near and immediate. A different action can be set within the app for each of these tiers. This creates a new concept for app design, based around proximity:

- Far region: This region covers the 10-30m surrounding the door (configurable.) By moving into this area, the app can trigger a silent notification (so that the user isn't alerted to it, but would see it if they went to unlock their device.) The app would check the cloud based CMS for more up-to-date information, and download it if available. If the user looked at their device, saw the notification and opened the app they would have up to date information and be able to find out what is on at that precise time. If the user were to leave this field, the silent notification would disappear from their device and they could carry on with their day. If they were to move closer to the beacon though...

- Near region: In this region 1-10m (configurable), if the user hadn't looked at their device and stayed in this area for 30 seconds or more, the app can send an active (buzz or sound) notification to nudge the user to look at their device. If they opened the app, it might come up with information about prices for the day. If the user was signed into the app, it might bring up the exhibitions that the user would be most likely interested in.

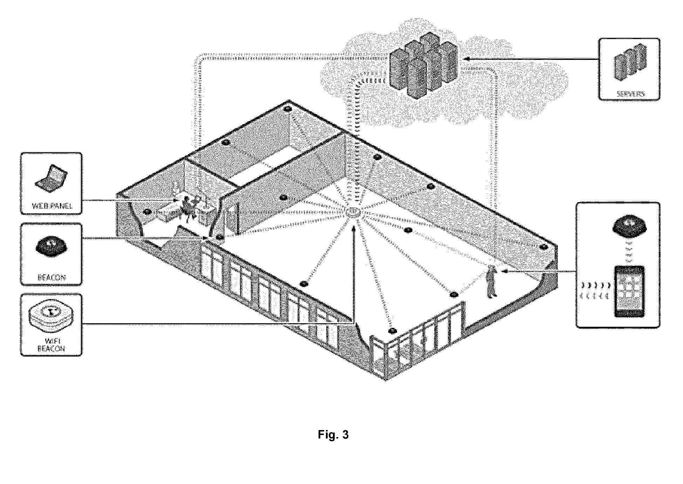

- Immediate region: Under 1m (configurable), the app would know that the user has entered the museum and, for users not signed in, show on a map where to go for tickets and bring up times of tours. For users who are signed in, the app could bring up their membership card automatically. It's within this region that payments through beacons also become a possibility. If the user had an online account and a 'pay-per-visit' set up, by entering the immediate region, a payment could be authorized to make the experience more seamless (Fig. 3).

Summary

According to the invention a system for user identification, making reservations and providing personalized services with a use of smart device is characterized in that it comprises (preferably - consists of) BooksyBiz web application, Booksy mobile app which can receive signal and communicate with web app and Booksy database, and micro localization smart devices which can transmit signals to client.

Preferable, additional part is Booksy service providers' catalog which consists of:

    a) Service providers details;
    b) History of reservations made by users;
    c) Current user reservations;
    d) Availability of personnel and equipment.

Preferably, Booksy mobile app is available for Android and iOS platforms.

Preferably, mentioned micro localization devices are standalone devices emitting constant radio signal with their UUID using Bluetooth Low Energy protocol .i.e. Beacons.

Preferably, mentioned micro localization devices can have:

    a) temperature sensor and/or
    b) accelerometer

According to the Invention method for user identification, making reservations and providing them personalized services using smart devices and desktop described above characterized in that it comprises following steps:

    a) It can localize user using micro localization devices
    b) It can transmit constant signal to our app;
    c) It can fire preprogrammed triggers using Trigger and Smart Devices management system;
    d) Our trigger can perform different task in user environment;

Preferably, said trigger can be:

    a) Displaying additional information about service on user device;
    b) Sending message to user;
    c) Displaying of user data and history on desktop application used by at reception desk like:

    - Client name;
    - Personalized Discounts available for that user;
    - Special requests made previously by that user.
    - Last bought service

    d) Playing sound (or voice messages);

e) Displaying advertisements on peripheral TV screen.

Preferably, additional it allows to:

a) enter service provider contact data;
b) configure services, their prices and duration;
c) add staff needed for providing services;
d) add equipment needed to provide services;
e) to conduct meetings calendar.

Brief Description of the Drawings

Preferred embodiments of the present invention are presented in a more detailed way with reference to the attached drawing, in which:

Fig. 1 presents beacon provided by Radius Networks company (Radius Networks marketing materials);

fig. 2 presents beacon transmitters and receivers;

fig. 3 shows schematic connectivity between beacons and user phone (based on kontakt.io marketing materials);

fig.4 presents schematic view of system architecture, and

fig. 5 presents math calculation for distortion of signal

Detailed Description

Preferred embodiments of the invention are described in details below. The examples serve only as an illustration and do not limit the scope of the present invention.

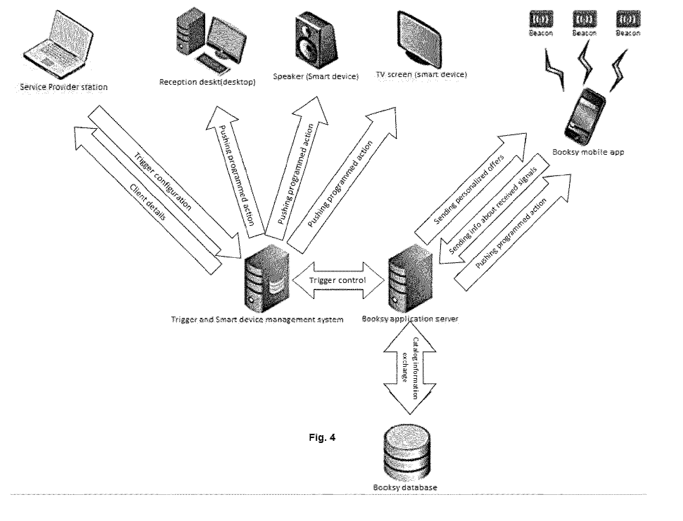

*System Architecture (Fig. 4)*

Whole solution architecture consists of:

1. Internet application BooksyBiz (desktop)

2. Booksy database with service provider data

3. Mobile application Booksy (smart device)

4. Smart beacon (smart device)

5. Micro localization and trigger management system (desktop)

6. Smart peripherals (smart device)

1. Internet application BooksyBiz (desktop)

Currently Booksy allows registration of service provider and his services in Booksy catalogue. BooksyBiz allows:

a. Adding your contact information

b. Configuration of services with their distinctive prices and their duration

c. Adding personnel and assigning them to services

d. Adding equipment needed for each service

e. conducting schedule of booked services

In this proposed solution desktop application will be extended with CRM module that will allow to store personal data about clients.

2. Booksy database with service provider data

All information about service providers and their bookings are stored in Booksy database. Also at server side lies ability to check is chosen time for chosen service is still available, checking for overlapping service or staff or equipment needed for providing this service. In case all parts needed are available in selected time Booksy database stores such registration.

3. Mobile application Booksy (smart device)

Mobile application Booksy is available at iOS and Android platform. It allows users to register in Booksy catalogue, search for particular service provider and making reservations for every service available.
In this solution this application will serve additional purpose and it will receive signals from smart devices like beacons. Based on triangulation algorithm it will allow Booksy server to calculate exact user location inside service provider place. It will allow Booksy trigger management system to activate Action assigned for such situation like "display data about client" or "play sound".

4. Smart beacon (smart device)

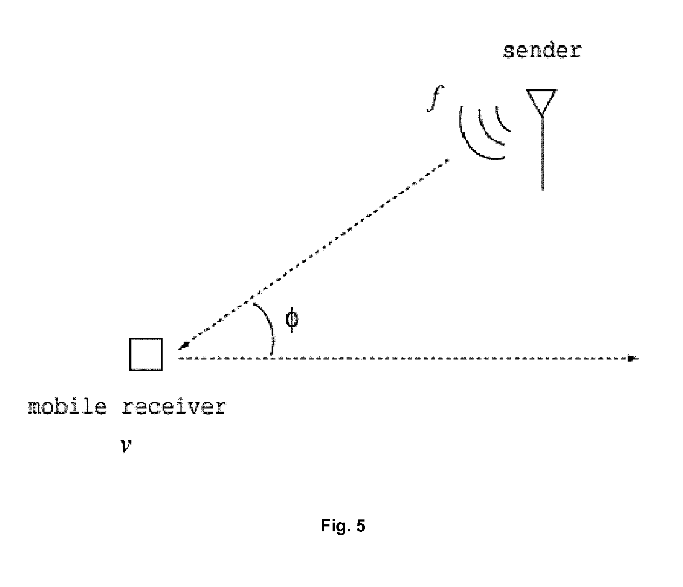

Smart beacon is a device that will transmit signal in the same manner and using the same standard as normal beacons. Innovative part is in not what that beacon send but how does it do it. In our concept transmission will be held in particular intervals varying from 0.01 to 0.1 second. Based on Doppler frequency shift and fading receiving application can measure distance and location of itself in comparison to transmitter. (Fig. 5).
Distorted signal can be calculated using this:

$$f' = f + f\left(\frac{v}{\text{SOL}}\cos\phi\right)$$

## 5. Micro localization and trigger management system (desktop).

This management system allows administrator to configure whole landscape of devices inside every user provider local. It allows to assign human readable names to every beacon (like door, room #1 etc.), it allows adding of peripheral devices and their location in local and proximity to other beacons.

Triggers allow us to define actions that will be fired when proper environment parameters are set. User defines every step in "If this then that" manner so for example is beacon Door emits signal with UUID1 and user application receives that signal server will know that user is in proximity with our door. If he is not in proximity with other beacons we can assume that he is outside. If we receive information from other beacon about same user we can assume that user is moving through door inside local. So know we can fire "Send notification" action and know person sitting at the reception desk will see all the data about client even before he reaches reception desk.

## 6. Smart Peripherals (smart device).

Connectivity with system allows us to send commands to such devices for example to play song when user is in proximity or send voice message "User Patric, it your turn for haircut" to speakers close to user named Patric. In our solution we are using only those devices that are compatible with WiFi and Bluetooth protocol and that are using TCP/UPD and HTTP protocols for communication.

**Solution for problem #1 User needs to know if his service provider (i.e. barber) offers booking option**

Currently when user wants to make a reservation he needs to know that service provider offer such option, that use service provider exists at all and he need to find him in any catalogue. In most cases this will be checked and done using phone or internet. But currently no more than 40% of service providers has their own website and offer digital reservation.

In our solution Booksy already have catalogue of service providers that allow reservations. This way if users will appear in proximity to any Booksy beacon his application on smartphone will receive information from our server about what service provider is near that client. This way user will have all the data about service provider even before he will check his app looking for that provider.

Using Booksy database and Booksy app this user will be able to set e meeting without direct contacting provider or he will be able to add this provider to his favorites to make a reservation later.

**Solution for problem #2 User needs to know exact name of service provider to be able to find him in any catalogue.**

Because of triangulation of signal receiving from beacons we can locate user inside every local. We can locate such smart devices not only inside local but in their proximity for example in shop window. This way is user will go near such device we will notify his application that such service provider is in his proximity. Knowing that user is near and knowing history of this user and that particular service provider we can push personalized offers to Booksy app for example discount offer to services that this user might need.

**Solution for problem #3 User can get information about all available services only at reception desk.**

Currently user can check basic services at his service provider using Booksy catalogue. There is no way to have information about additional offers or extensions to those services. In most cases user will be notified about such option by staff or by reading marketing information provided by service provider. Such channels are limited to human part as staff tends to forget about every extension client can buy and paper advertisement brochures take time to be printed and distributed.

Using micro localization, triggers and user history we can know how user interacts with devices but also how he interacts with the service itself. That allows us to prepare personalized information for that user associated with actions he makes. Combined with peripherals this allows us for example to:

1) Display advertisement on TV screen near user

2) If we know that user like manicure and we know that he just finished sun bath service we can play voice message in his room saying that there is additional discount for manicure prepared for this user and its available just now.

**Solution for problem #4 Service provider cannot offer personalized services.**

In traditional model personalization of services is made by service owner because in most cases he is the only person that remembers his clients and their habits. Also in micro sized firms (like barber) he is only person allowed to make such statements like discount.

Using our micro localization system, customer relationship management system and peripheral devices Booksy can notify any personnel about possible options that they can offer to any client. For example:

a) If client come for haircut but he also took a manicure we can offer him a discount for manicure available only Today.

b) If client enters local, staff personnel should say welcoming message.

c) On TV screen located in waiting room we can display welcoming message like "Hello Patric is nice to see you again".

d) If user enters sun bath room, read his history and play his favorite song from peripheral speakers.

e) Knowing that user will take sun bath for 10 minutes and in what room notify personnel when and where they should await for client with clean towel or dressing-gown.

Combinations of "IF" and "THEN" options and personalization here are limitless.

**Solution for problem #5 1. Service provider doesn't know who his client is.**

In traditional model we don't know history of our client with exception of:

- Our personnel that speaks with our client remembers that person

- Our client have membership card from which we can read information about him

Both those methods don't give us 100% information about client interactions with our company.
Using smartphone app, beacons and desktop application we can display to our personnel detailed information about user. It will look like this:

1) Our clients that has Booksy mobile app enters the service provider local.

2) Beacons are constantly transmitting signal.

3) Mobile app receives signal and notifies Booksy database about it.

4) Micro localization system informs Booksy database that such user is in proximity of such beacon.

5) Trigger system check if any of the information we have currently about that user (location, timing, app status, available staff and services etc.) matches any trigger defined.

6) We see that this is returning client. System fires action named "Send to reception desk all information about entering client"

7) On reception desk, desktop application (as thin client) displays information.

8) Now personnel can offer client personalized services or help him faster with his needs.

**Claims**

1. System for user identification, making reservations and providing personalized services with a use of smart device **characterized in that** it comprises BooksyBiz web application, Booksy mobile app which can receive signal and communicate with web app and Booksy database, and micro localization smart devices which can transmit signals to client apps in their proximity.

2. System according to claim 1, **characterized in that** it additional part is Booksy service providers' catalog which consists of:

   a) Service providers details;
   b) History of reservations made by users;
   c) Current user reservations;
   d) Availability of personnel and equipment;

3. System according to claims 1 or 2, **characterized in that** its mobile application is available for iOS and Android platform;

4. System according to claims 1, 2 or 3, **characterized in that** it said micro localization devices are standalone devices emitting radio signal with their UUID using Bluetooth Low Energy protocol.

5. System according to any claims from 1 to 4, **characterized in that** it said micro localization devices can have.:

   a) Temperature sensor and/or
   b) accelerometer

6. Method for user identification, making reservations and providing them personalized services using smart devices and desktop according to claims 1 - 5 **characterized in that** it comprises following steps:

   a) It localize user using micro localization devices;
   b) It transmits constant signal to our app;
   c) System fires preprogrammed triggers using Trigger and Smart Devices management system;
   d) Trigger performs different tasks in user environment

7. Method according to claim 6, **characterized in that** said trigger we mean

   a) Displaying additional information about service on user device;
b) Sending message to user;
c) Displaying of user data and history on desktop application used by at reception desk like:

   • Client name;
   • Personalized Discounts available for that user;
   • Special requests made previously by that user;
   • Last bought service.

d) Playing sound (or voice messages);
e) Displaying advertisements on peripheral TV screen.

8. Method according to claim 7 or 8, **characterized in that** additional it allows to:

   a) enter service provider contact data
   b) configure services, their prices and duration
   c) add staff needed for providing services
   d) add equipment needed to provide services
   e) to conduct meetings calendar.

Fig. 1

Fig. 2

Fig. 3

Fig. 4

**Fig. 5**

Europäisches
Patentamt

European
Patent Office

Office européen
des brevets

**EUROPEAN SEARCH REPORT**

Application Number

EP 15 46 1503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/365334 A1 (HUREWITZ MATTHEW [US]) 11 December 2014 (2014-12-11) <br> * paragraph [0003] - paragraph [0005] * <br> * paragraph [0018] - paragraph [0019]; figure 1 * <br> * paragraph [0024] - paragraph [0026] * <br> * paragraph [0028] - paragraph [0029] * <br> * paragraph [0030] - paragraph [0041] * <br> * paragraphs [0044], [0049], [0050] * <br> * paragraph [0054] - paragraph [0055] * <br> * paragraph [0057] - paragraph [0062] * <br> * paragraph [0068] - paragraph [0077] * <br> * paragraph [0084] - paragraph [0106]; figures 10,11 * <br> ----- | 1-8 | INV. <br> H04W4/00 <br> H04W4/02 <br> H04L29/08 <br> G06Q30/02 <br> G06Q30/06 <br> G06Q20/32 |
| X | US 2013/281084 A1 (BATADA ASIF NOORUDDIN [US] ET AL) 24 October 2013 (2013-10-24) <br> * paragraph [0016] - paragraph [0020] * <br> * paragraphs [0024], [0026] * <br> * paragraphs [0028], [0029], [0032] * <br> * paragraph [0034] - paragraph [0037] * <br> * paragraphs [0050], [0076] * <br> ----- | 1-8 | |
| X <br><br> Y | US 2015/005011 A1 (NEHRENZ KURT [AU] ET AL) 1 January 2015 (2015-01-01) <br> * paragraphs [0006], [0011], [0013] * <br> * paragraphs [0015], [0018] * <br> * paragraph [0048] - paragraph [0063]; figure 1 * <br> * paragraph [0067] - paragraph [0070] * <br> * paragraphs [0073], [0075]; figures 2,3 * <br> * paragraph [0079] - paragraph [0080] * <br> * paragraphs [0092], [0098], [0099]; figures 8b,8c * <br> * paragraph [0109] - paragraph [0110] * <br> ----- <br> -/-- | 1,3-7 <br><br> 2,8 | **TECHNICAL FIELDS SEARCHED (IPC)** <br> H04W <br> H04L <br> G06Q |

The present search report has been drawn up for all claims

| Place of search | Date of completion of the search | Examiner |
|---|---|---|
| Munich | 17 September 2015 | Losseau, Dominique |

EPO FORM 1503 03.82 (P04C01)

Europäisches
Patentamt

European
Patent Office

Office européen
des brevets

# EUROPEAN SEARCH REPORT

Application Number

EP 15 46 1503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/358666 A1 (BAGHAIE MARJAN [US] ET AL) 4 December 2014 (2014-12-04)<br>* paragraph [0015] - paragraph [0017] *<br>* paragraph [0019] - paragraph [0025] *<br>* paragraph [0032] - paragraph [0038] *<br>----- | 1-8 | |
| Y | US 2007/067199 A1 (SHINE DAVID J [US] ET AL) 22 March 2007 (2007-03-22)<br>* paragraph [0008] - paragraph [0010] *<br>* paragraph [0033] - paragraph [0037] *<br>----- | 2,8 | |
| X | WO 2013/025770 A1 (CONNECTQUEST [US]; MOLDAVSKY DAVID [US]; TOCCO JOSEPH A [US]) 21 February 2013 (2013-02-21)<br>* paragraph [0006] - paragraph [0007]; figure 1 *<br>* paragraph [0011] - paragraph [0012] *<br>* paragraph [0025] - paragraph [0027] *<br>* paragraph [0031] - paragraph [0035] *<br>* paragraphs [0040], [0054] *<br>* paragraph [0057] - paragraph [0061] *<br>* paragraph [0067] - paragraph [0070] *<br>* paragraph [0077] - paragraph [0078]; figure 9 *<br>* paragraph [0082] - paragraph [0083]; figure 10 *<br>* paragraphs [0085], [0104], [0109]; figures 12,13 *<br>----- <br>-/-- | 1-8 | TECHNICAL FIELDS SEARCHED (IPC) |

The present search report has been drawn up for all claims

| Place of search | Date of completion of the search | Examiner |
|---|---|---|
| Munich | 17 September 2015 | Losseau, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 46 1503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/176574 A1 (README SYSTEMS INC [US]) 30 October 2014 (2014-10-30)<br>* paragraph [0008] *<br>* paragraph [0027] - paragraph [0039]; figure 1 *<br>* paragraph [0045] - paragraph [0048] *<br>* paragraph [0059] - paragraph [0067]; figure 2 *<br>* paragraphs [0073], [0083], [0084]; figure 3 *<br>* paragraphs [0086], [0092], [0093]; figure 4 *<br>* paragraph [0102] - paragraph [0107]; figure 5 *<br>* paragraph [0114] - paragraph [0115]; figure 9 *<br>* paragraph [0135] - paragraph [0137] *<br>----- | 1-8 | |
| A | Erik Dahlgren ET AL: "Evaluation of indoor positioning based on Bluetooth R Smart technology Master of Science Thesis in the Programme Computer Systems and Networks",<br>,<br>10 June 2014 (2014-06-10), XP055141536,<br>Retrieved from the Internet:<br>URL:http://publications.lib.chalmers.se/records/fulltext/199826/199826.pdf<br>[retrieved on 2014-09-19]<br>* chapter 4.7.1;<br>page 30 *<br>* chapters 8.3 and 8.4;<br>page 77 - page 78 *<br>----- | 1-8 | TECHNICAL FIELDS SEARCHED (IPC) |
| A | US 2005/197922 A1 (PEZARIS PETER [US] ET AL) 8 September 2005 (2005-09-08)<br>* paragraphs [0033], [0040] *<br>* paragraph [0045] - paragraph [0063] *<br>----- | 1-8 | |

-/--

The present search report has been drawn up for all claims

| Place of search | Date of completion of the search | Examiner |
|---|---|---|
| Munich | 17 September 2015 | Losseau, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 15 46 1503

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/065584 A1 (LYON JAMES M [US] ET AL) 14 March 2013 (2013-03-14)<br>* paragraphs [0004], [0045], [0052] *<br>* paragraph [0058] - paragraph [0062] *<br>----- | 1-8 | |

TECHNICAL FIELDS
SEARCHED      (IPC)

The present search report has been drawn up for all claims

| Place of search | Date of completion of the search | Examiner |
|---|---|---|
| Munich | 17 September 2015 | Losseau, Dominique |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 46 1503

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2015

| Patent document cited in search report | | Publication date | Patent family member(s) | | Publication date |
|---|---|---|---|---|---|
| US 2014365334 | A1 | 11-12-2014 | NONE | | |
| US 2013281084 | A1 | 24-10-2013 | NONE | | |
| US 2015005011 | A1 | 01-01-2015 | US | 2015005011 A1 | 01-01-2015 |
| | | | WO | 2014210556 A1 | 31-12-2014 |
| US 2014358666 | A1 | 04-12-2014 | AU | 2014202965 A1 | 18-12-2014 |
| | | | CA | 2853110 A1 | 30-11-2014 |
| | | | US | 2014358666 A1 | 04-12-2014 |
| US 2007067199 | A1 | 22-03-2007 | NONE | | |
| WO 2013025770 | A1 | 21-02-2013 | CA | 2881633 A1 | 21-02-2013 |
| | | | US | 2013210461 A1 | 15-08-2013 |
| | | | US | 2014342760 A1 | 20-11-2014 |
| | | | WO | 2013025770 A1 | 21-02-2013 |
| WO 2014176574 | A1 | 30-10-2014 | NONE | | |
| US 2005197922 | A1 | 08-09-2005 | NONE | | |
| US 2013065584 | A1 | 14-03-2013 | CN | 102882637 A | 16-01-2013 |
| | | | EP | 2756642 A2 | 23-07-2014 |
| | | | JP | 2014530524 A | 17-11-2014 |
| | | | KR | 20140061519 A | 21-05-2014 |
| | | | US | 2013065584 A1 | 14-03-2013 |
| | | | WO | 2013066499 A2 | 10-05-2013 |

EPO FORM P0459

For more details about this annex : see Official Journal of the European Patent Office, No. 12/82